(19) Europäisches Patentamt / European Patent Office / Office européen des brevets

(11) **EP 3 490 223 B1**

(12) **EUROPEAN PATENT SPECIFICATION**

(45) Date of publication and mention
of the grant of the patent:
**15.04.2020 Bulletin 2020/16**

(51) Int Cl.:
*H04L 29/08* ^(2006.01)       *H04L 29/06* ^(2006.01)
*H04W 12/12* ^(2009.01)       *H04W 4/40* ^(2018.01)
*B60R 16/023* ^(2006.01)

(21) Application number: **17203558.6**

(22) Date of filing: **24.11.2017**

(54) **SYSTEM AND METHOD FOR SIMULATING AND FOILING ATTACKS ON A VEHICLE ON-BOARD NETWORK**

SYSTEM UND VERFAHREN ZUR SIMULATION UND VEREITELUNG VON ANGRIFFEN AUF EIN FAHRZEUGBORDNETZWERK

SYSTÈME ET PROCÉDÉ POUR SIMULER ET DÉJOUER DES ATTAQUES SUR UN RÉSEAU À BORD D'UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.05.2019 Bulletin 2019/22**

(73) Proprietor: **Bayerische Motoren Werke Aktiengesellschaft**
**80809 München (DE)**

(72) Inventor: **Salfer, Martin**
**80809 München (DE)**

(56) References cited:
**US-A1- 2015 058 993**

• **Martin Salfer ET AL: "Efficient Attack Forest Construction for Automotive On-board Networks" In: "ECCV 2016 conference", 1 January 2014 (2014-01-01), Springer International Publishing, Cham 032548, XP055461699, ISSN: 0302-9743 ISBN: 978-3-642-33485-6 vol. 8783, pages 442-453, DOI: 10.1007/978-3-319-13257-0_27, * Sections 1-6 * * figures 1-4 ***
• **SALFER MARTIN ET AL: "Attack surface and vulnerability assessment of automotive Electronic Control Units", 2015 12TH INTERNATIONAL JOINT CONFERENCE ON E-BUSINESS AND TELECOMMUNICATIONS (ICETE), SCITEPRESS, vol. 4, 20 July 2015 (2015-07-20), pages 317-326, XP032927681, [retrieved on 2016-07-20]**
• **STEFAN FENZ: "An ontology- and Bayesian-based approach for determining threat probabilities", INFORMATION, COMPUTER AND COMMUNICATIONS SECURITY, ACM, 2 PENN PLAZA, SUITE 701 NEW YORK NY 10121-0701 USA, 22 March 2011 (2011-03-22), pages 344-354, XP058002626, DOI: 10.1145/1966913.1966958 ISBN: 978-1-4503-0564-8**

EP 3 490 223 B1

**EP 3 490 223 B1**

**Description**

The invention relates to a system and method for simulating and foiling or preventing attacks on a vehicle on-board network. It is determined how probable an attack to a node of a network is and actions can be taken based on the determined probability. For example, if an attack using a specific access node is determined to be probable, i.e. that an asset node can be reached through a path starting in the network from the access/start node to the asset node with some probability, the access node or a critically contributing node or communication medium can be disabled. The on-board network is represented as a graph and connections in the network are represented as edges. In Principle, attacks on the vehicle on-board network are simulated taking into account the resources and skills of an attacker and probable attack paths are determined. When an asset node providing especially vehicle functions or valuable data is reached through an attack path, the path is a critical attack path and actions can be taken to disable or defuse the critical attack path.

Vehicles can comprise more than hundred electronic control units or computer systems. The electronic control units or computer systems, which are denoted as control units or ECUs in the following, are at least partially interlinked and interlinked control units form a vehicle on-board network. A vehicle can also have more than one vehicle on-board network. Due to potential implementation weaknesses of firmware and/or software implementations executed by the control units (which may also be virtual or virtualized control units) attacks on the control units and thus the vehicle on-board network are possible. Especially attack combinations could be used to attack the vehicle on-board network to evade implemented security measures.

On the other hand, deploying security fixes to a vehicle on-board network is expensive. Every change requires thorough and lengthy testing for guaranteed side-effect free car safety. Security support for vehicles is extra costly as a vehicle's life cycle often spans more than a decade and vehicles are widely distributed. Hence, the automotive industry invests in comprehensive engineering and security assessments with a long-term foresight. Some methods are the assessment of the ECUs' attack surfaces and the construction and inference of attack graphs. A high grade of automation and efficiency is necessary for handling the many deeply customized and tailored automotive ECUs.

Moreover, data collection for security analysis is a tedious task but data collection methods known from other networked systems cannot be applied in an automotive environment with mainly embedded systems.

ECUs usually communicate heterogeneously and combine a large, fast-changing variety of real-time and general-purpose operating systems, application binary interfaces and file systems for the sake of maximum dependability and energy efficiency and thus sustainability. While, for example, a corporate network usually communicates homogeneously over IP (Internet Protocol), a vehicle on-board network integrates at least one of CAN (Controller Area Network), MOST (Media Oriented Systems Transport), LIN (Local Interconnect Network), FlexRay, ByteFlight, BroadR-Reach, etc. Also the ECUs in a vehicle on-board network themselves differ from computers hardware on a company network, which usually operates homogeneously on x86 processors with POSIX-(Portable Operating System Interface)-compliant operating systems. On the vehicle on-board network heterogeneity is much more pronounced where a diversity of architectures can be linked at the same time such as TriCore, Super H, PowerPC, V850, x86, ARM, etc. with OSEK (Offene Systeme und deren Schnittstellen für die Elektronik in Kraftfahrzeugen; English: Open Systems and their Interfaces for the Electronics in Motor Vehicles), VDX-(Vehicle Distributed Executive), AUTOSAR- (AUTomotive Open System ARchitecture) and/or POSIX compliant operating systems etc. Online data collection methods can therefore hardly cover all available security measures that are integrated into automotive systems.

Attack trees are known and originate from fault tree analysis techniques from as early as 1981 and became popular at last by publications in the 1990s. Attack trees are seen as a good security engineering method. The standard method is putting up a Bayes network and somehow quantifying the distribution table probabilities and using inference methods to derive the overall probability of compromise. The Bayes network drawback is that it cannot efficiently model a history of decisions/steps an attacker took. It can easily model a network with a couple of states, but those are not enough to represent large number of attack combinations an attacker could take. The other drawback of Bayes networks is the space and computational complexity. The distribution tables grow exponentially with the number of inputs while a vehicle on-board network can easily have more than 100 inputs, i.e. the table would at least comprise 2100 floating point numbers resulting in 230 * 64bit = 8.589.934.592 Byte ≈ 9 Gigabyte. Bayesian networks succumb to complexity and cycles.

Even though Bayes networks are well-studied and popular for probability modelling and attack graphs, Bayesian networks cannot model and track attack cost and budget efficiently.

Bayesian networks can model only finite states, yet an accurate cost tracking would require a Bayesian network with an infinite number of states and nodes. Bayesian networks cannot cope with cycles, yet almost any sufficiently realistic attack graph contains cycles. Bayesian networks have exponentially growing probability distribution tables; a Bayesian node's partition table with 100 input variables would result in a table at least as big as $2^{100}$Byte $=1024^{10}$ Byte.

Attack trees are a common method for expressing the chaining of exploit actions. They show what attacks can be expected and how attacks are combined in order to reach a certain goal. Constructing and maintaining attack trees in general has been widely explored by research. Shelby Evans and James Wallner recommend attack trees for structuring thinking and seeing things through the eyes of ("creative and cunning") adversaries. Andrew P. Moore et al. propose a more public disclosing of learning from past security events and focus on the refinement of attack trees with growing attack knowledge. David M. Nicol et al. see attack trees as a systematic method of reusing knowledge and also useful for combinations in large systems. However, creating attack trees that comprise all potential exploits is difficult. Finding all potential exploits of all potential adversaries is practically impossible. A missing exploit in an attack tree may result in a vulnerable system: A missing exploit might allow extra, unseen attack paths that successfully compromise a security goal. Attack trees are used for the evaluation of stationary enterprise computer networks with known exploits for assessing the overall network security.

Attack graph-based security evaluation is a current focus of research. The aim is to support IDS (Intrusion Detection Systems) and to handle the dynamic change of those systems and inclusion of public vulnerability databases. But automotive systems are too heterogeneous to be reflected in standard scanning tools or public vulnerability databases and need other means for deriving attack graphs. Popular probability methods like Bayes networks cannot model attacker history as they are per design blind on states beyond predecessors. A Bayes network's probability table relies solely on the direct predecessors.

Martin Salfer et al. (ECCV 2016 conference, 1 January 2014, Springer International publishing, vol. 8783, pages 442-453) relates to an efficient attack forest construction for automotive on-board networks and proposes an attack forest construction method for a vehicle's on-board network security evaluation, and predictions about attractiveness, exploitability, and attackers. An algorithm implementation can construct attack forests with typically sized system models usually within a few minutes and with an asymptotic, computational complexity of $O(n*log(n))$.

The objects of the present invention are solved by the features of the independent claims. Preferred embodiments are given in the dependent claims.

The invention presents a way to assess a security risk of the vehicle on-board network using automatically generated and analyzed attack graphs, e.g. paths, eliminating deficits of previous approaches. Attacker resources are considered to provide realistic risk estimations. An attack surface and vulnerability of an automotive on-board network is assessed, including the implications of its architecture and the attractiveness of individual ECUs and functions for an attacker.

In a first aspect, a method for assessing attack paths on a vehicle on-board network is provided, wherein components connected on the vehicle on-board network represent nodes of a graph, in which an edge between a first node and a second node is a unidirectional or bidirectional communication link between the first and the second node, nodes allowing access to the network are start or access nodes, nodes providing specific functions or access to specific functions are asset nodes, and wherein the edge is weighted and the weight of the edge is a cost required to attack the second node from the first through the communication link, a path is formed by at least one node of the graph, and wherein a probability value is determined for the path, for the at least one node of the graph reachable nodes connected to the at least one node are determined, and for each reachable node of the reachable nodes it is determined whether a cumulated cost of the path to the reachable node is within a predefined cost limit, and whether the probability value for the path including the reachable node is within a probability limit, and if this is the case, defining the path to be a probable attack path.

The nodes can be hardware and/or software components of the network.

The probable attack path may be defined to be a critical attack path if an asset node is reached and the path is a probable attack path.

The steps of determining a probability value for the path can be repeated. Defining that the path is a probable attack path may be repeatedly performed and for each reachable node of the reachable nodes it may be determined whether the cumulated cost for reaching the reachable node exceeds the predefined cost limit. It can also be determined whether the probability value for a path including the reachable node exceeds the probability limit. If either is the case, the path to the reachable node can be determined to be an improbable attack path.

An improbable attack path can be discarded and/or information on the improbable attack path may be stored, e.g. the improbable attack paths can be counted. The information on the improbable attack path can e.g. be used to determine who probable an accidental success of an attack is.

The method can be executed whenever a component or communication link is added to or removed from the network. The network is the vehicle on-board network. A change in the components or the communication links can lead to a different cost limit and/or weights of the edges, which would require a different skill set and/or resources of an attacker.

The network can comprise a vehicle network, especially a CAN-bus, AUTOSar, Ethernet, FlexRay, etc.

In case an asset node is reached on a path from an access node start and no limit is reached, a critical attack path is detected. A message can be issued to a control unit of a vehicle or an off-board computing system identifying the critical attack path, in particular when a critical attack path is detected.

The control unit can convey the signal to an emitter for visually and/or acoustically displaying a message, preferably in the vehicle, in particular requesting to disable a function associated with the access node of the critical path. The emitter can be a display unit, e.g. a screen or touch screen, an audio device, e.g. a sound system or speaker.

The emitter can be fixed to the vehicle or coupled to the vehicle via a wired and/or wireless connection. The Emitter hence can also be and/or reside in a smartphone or tablet.

The access node can be an interface. The use of the interface or access node may be recorded to determine a benefit of the interface. The determined benefit can be compared with a threshold value and, based on the determined benefit and/or the comparison, a message can be conveyed to the user of a vehicle suggesting to disable the access node/interface. In severe cases, the vehicle or remote computing system can automatically disable a node or link of a critical path and inform the user.

For example in spreading cases when many users of different vehicles are endangered, nodes or links of critical paths can be disabled automatically by the respective vehicle or a remote computing system and the users can be informed about the measures. The remote computing system can be configured to trigger the disabling action by e.g. sending specific messages to affected vehicles. Affected vehicles can e.g. be determined from a database accessed by the remote computing system.

Also a node or a communication link in the critical path can be disabled to disable the critical path. The use of the node or communication link can be recorded to determine a benefit of the node or communication link. The determined benefit can compared with the threshold value or another threshold value. Based on the determined benefit and/or the comparison, the node or communication link may be automatically disabled for disabling the critical path and optionally an informative message is conveyed to the user of a vehicle. In case the critical path is disabled by disabling a communication link, the remaining nodes of the path can function normally. Also disabling a node in particular means that specific functions of the node, which e.g. represents an interface or ECU, are disabled.

In another aspect, a system is provided, wherein the method is executed or performed by a control unit of a vehicle or by a remote computing system.

In yet another aspect, a vehicle comprising the system is provided.

Reachable nodes are nodes that are directly connected to the node, i.e. without another node between them. Nodes already visited by a path may not be regarded as reachable nodes or target nodes again. If a path from an access node to an asset node is established without reaching a limit, this is a critical attack path. Edges are writable wired or wireless physical or virtual communication links or connections. The originating node must have write access onto a link, and the target node must read from this link.

Details of the invention are now explained also with reference to the figures:

Fig. 1 illustrates a System Model with exemplary nodes.
Fig. 2 illustrates a model of the Attacker Profile.
Fig. 3 illustrates a model for Exploitability Anticipation.
Fig. 4 depicts a *Path* class diagram.
Fig. 5 illustrates a flowchart of an exemplary embodiment of the method.
Fig. 6 illustrates a flowchart summarizing the method.
Fig. 7 illustrates a Gaussian distribution.
Fig. 8 illustrates an accumulated probability of a Gaussian random variable.

To understand the invention, first some parameters are explained and defined for better understanding of the model underlying the method. A General notation for a system model, an attacker profile and some elementary Gaussian probability mathematics are presented.

Model entities are written in italics and start with a upper case letter, e.g., *System Model.* All calligraphic, upper case Latin letters are functions, e.g., $\mathcal{C}$. All non-calligraphic, upper case Latin letter are sets, e.g., *S*. All lower case, non-calligraphic Latin letters are single entities, real or natural numbers, or tuples, e.g., e. All sets use the corresponding lower case letter to declare a single entity or tuple of a set. Index symbols necessary for numbering entities will always be noted in lower case, e.g., $e_i$. The following symbol examples are given for clarity: *As* is the skill set of all available *Attacker Profiles, as* is an *Attacker Profile's* skill set, $a_{Si}$ is a numbered skill (sub)set of an *Attacker Profile,* and $a_{si}$ or $a_s$ is one particular (numbered) *Attacker Profile s*kill.

A graph is a structure amounting to a set of objects in which some pairs of the objects are in some sense "related", e.g. linked by a communication link. The objects are called nodes and the relation between pairs of nodes is called an edge. Typically, a graph is depicted in diagrammatic form as a set of dots for the nodes, joined by lines or curves for the edges. The edges may be directed or undirected. The nodes in this case are components on the vehicle on-board network, e.g. electronic control units (ECUs) or several software pieces running on the ECUs or commuting entities of the vehicle.

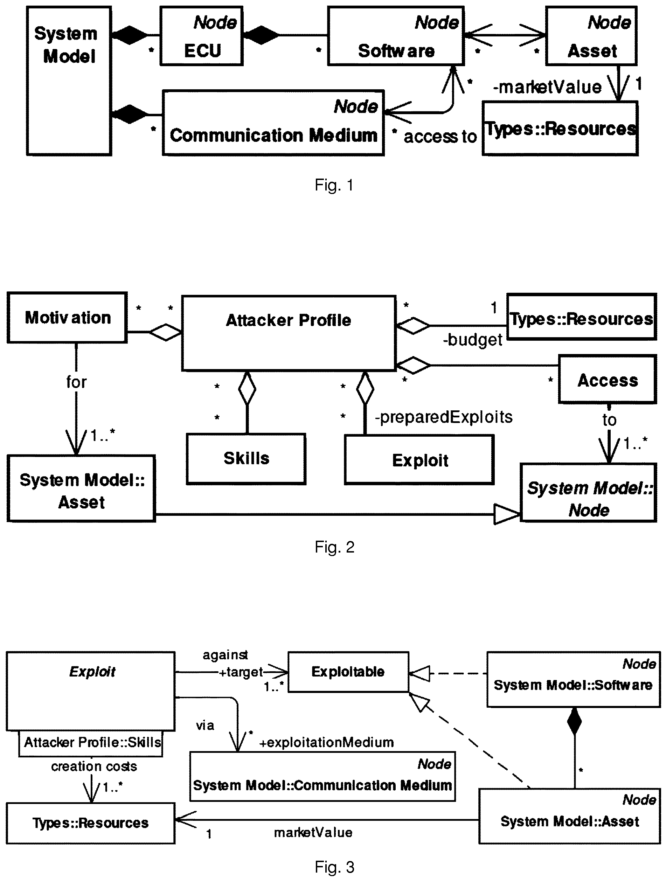

The presented *System Model* represents a vehicle on-board network. The *System Model* comprises several model entity nodes (simply referred to as nodes), e.g., *Software, Asset, ECU,* and *Communication Medium* as shown in Fig. 1. The *System Model* represents a vehicle on-board network: its *Software, Communication Media* and *Asset* nodes. The *Software* nodes are part of *ECUs* nodes and exchange any information over *Communication Media,* e.g., CAN, MOST, Ethernet, FlexRay, gateway connections, or sockets. *Assets* nodes are valuables and have a market value. The exemplarily illustrated *System Model* is a generalization of various engineering models and is required for a homogeneous attack graph.

Each *Software* node represents code that runs independently and with some memory protection, so that a code injection exploit's effect will be contained primarily within this Software node. With the exception of over-the-air (OTA) software updates, the vehicle's software installation is rather static and usually stays the same for its entire product life, which typically spans more than ten years. Each independent piece of code can be modelled as a Software node, no matter how they are separated, e.g. separate ECUs or VMs (Virtual Machines).

An Asset node can not only model marketable Assets, but also safety-relevant Assets, i.e., how much would an adversary spend for the control over passengers/pedestrian safety. Some inspiration for Assets and related threats can be found in the BSI IT-Grundschutz Catalogues (https://www.bsi.bund.de/DE/Themen/ITGrundschutz/ITGrundschutzStandards/ ITGrundschuStandards_node.html). Systems without a general purpose operating system are considered. The system models can, for example be directly derived from the vehicle engineering documents.

An Attacker Profile represents at least one (human) attacker with economic reasoning. Fig. 2 illustrates a model of the Attacker Profile. The Attacker Profile characterizes the attacker by a set of Motivation entities, Access entities of the System Model nodes, budget, weighted Skills, and their already prepared Exploits.

A Motivation entity points to one or more Assets nodes of the System Model (System Model::Asset). The Motivation entity for an Asset node is optionally annotated with a specific price value that an attacker is willing to pay for conquering the asset node. An attacker's evaluation of an Asset node can greatly deviate from the (black) market value of the asset. For example, an attacker that is unable to sell or utilize a stolen car will value a car theft Asset far below the market value, possibly zero.

An Access entity of the Attacker Profile models entry points, at which an attacker can initially attack the system. Each Access entity points to at least one System Model node. Skill entities represent an attacker's knowledge and techniques relevant for exploiting Software nodes. Each Skill entity is weighted with a floating point number $\chi \in \mathbb{R}^+$ as a grade and rates an Attacker Profile's Skill in comparison to the corresponding Skill of the reference Attacker Profile $a_1$. The meaning of the reference attacker skill, having always the qualifier 1, can be arbitrarily defined, yet this definition must be for defining Attacker Profiles and for assessing exploitability of Software nodes. An attacker can only attack nodes that can read from nodes already compromised. Only with a read interface, someone can compromise another linked node, the next node. The attacker model describes remote code executions. It may comprise three security goals at once: confidentiality, integrity and/or availability. Any input can possibly lead to a remote code injection. Therefore, development documents are processed and analyzed, which is available long before source code or deployable binary images.

The following attacker strategy is assumed:

- The hacker will use all exploits in his/hers possession,
- develop new exploits as cheap as possible,
- will not re-exploit already owned/conquered nodes, but
- will "drill" as deep into the vehicle no-board network as possible along a path and therefore following one path to its end, the path being made off sequentially conquered nodes.

An Exploitability Anticipation represents anticipated Exploits that the System Model could be confronted with or an attacker could create and use for gaining control of a node, also cf. Fig. 3. Each Exploit can only be launched against specific Software or Asset nodes, and via specific Communication Media. An Exploit's creation cost is defined by a map of required Skills and Resource estimations. The Exploit expectations are derived from analyzing software, ECU code and/or metadata from other sources.

The individual *Resources* estimation for an *Exploit* is given according to the reference *Attacker Profile* $a_1$, i.e., every *Skill* $e_s \in e_S$ is priced with regards to a *Skill* grade of 1. The individual *Resources* estimation for a given *Exploit* e and a given *Skill* $e_s \in e_S$ is expressed as

$$\mathcal{C}_E(e, e_s)$$

and maps to an appropriate *Resource* $r \in R,$ that represents a monetary value and is derived from a set of input parameters. Some of the input parameters for $r$ are a target's code size and complexity, known software and hardware defects and vulnerabilities in programming frameworks, processors, memory architecture, operating system and security elements. The cost for an *Exploit e* is specific for every *Attacker Profile* a due to the individual set of *Skills as* and is expressed as

$$\mathcal{C}_E(a,e).$$

Every *Exploit e* $\in$ E requires a specific *Skill Set* $e_S$ and each *Attacker Profile* a bears a specific *Skill Set* $a_S$. Each required *Skill* $e_s \in e_S$ is matched against the corresponding *Skill* $a_s \in a_S$. An *Attacker Profile's Skill* always bears a certain degree and influences the cost $C_E(a,e)$: If an *Attacker Profile's Skill* is rated higher than the required *Skill* of an *Exploit,* an *Attacker Profile* is awarded with a lower exploit cost

$$\mathcal{C}_E(a,e)$$

and vice versa. The cost for an *Exploit* e for an *Attacker Profile* a is expressed as

$$\mathcal{C}$$

$$_E(a,e)$$

and is defined as the sum of skill-specific basic costs

$$\mathcal{C}_E(e,e_s),$$

divided by the corresponding *Skills* of the *Attacker Profile* as in

$$\mathcal{C}_E(a,e) := \sum_i \left( \frac{\mathcal{C}_E(e,e_{si})}{a_{si}} \right) \text{ with } a_{si}, e_{si} \in e_S. \qquad (1)$$

An *Software's* vulnerability, i.e., having more than 0 vulnerabilities, can be modelled with number of independent input variables i, the affected code size x and the vulnerability density v and the formula

$$\mathcal{P}(X > 0) = 1 - (1 - v)^{ix}. \qquad (2)$$

The expected finding effort *f* can be computed with the initial setup effort f0 and the sum of subsequent effort fi for each attack surface spot multiplied with the vulnerability v and the average number of necessary tries

$$\bar{n} = 0 + \sum_{i=1}^{i=k} \left( i * q^{i-1} * p \right) + k * P_B(X = 0)$$

$$= v \sum_{i=1}^{i=k} \left( i(1-v)^{i-1} \right) + k(1-v)^k$$

with the formula

$$\bar{f} = f_0 + \bar{f}_i \left( v \sum_{i=1}^{i=k} \left( i(1-v)^{i-1} \right) + k(1-v)^k \right). \tag{3}$$

The expected effort $\bar{g}$ for creating a software exploit is the sum of the expected access effort $\bar{a}$, the expected basic effort $\bar{b}$ and the expected countermeasure mitigation effort $\bar{c}$ and combined in

$$\bar{g} = \bar{a} + \bar{b} + \bar{c}. \tag{4}$$

Finally, the expected overall ECU exploitation value $\bar{o}$ is

$$\bar{o} = \bar{f} + \bar{g}. \tag{5}$$

The potential exploitation cost estimations is derived directly from automotive engineering documents.

Gaussian distributions occur in nature often. Gaussian probability theory facilitates grasping naturally random uncertainty. Random variables are named $r$. A mean value of a Gaussian distributed random variable $r$ is named $\mu$ or $\mu_r$. A standard deviation value of a Gaussian distributed random variable $r$ is named $\sigma$ or $\sigma_r$.

The central limit theorem leads to an approximate Gaussian distribution. A few random variables of arbitrary behavior are enough for resulting in a distinct Gaussian distribution. A famous example is a Galton box (also known as bean machine). When independent random variables are added up, the sum becomes Gaussian distributed, cf. the central limit theorem.

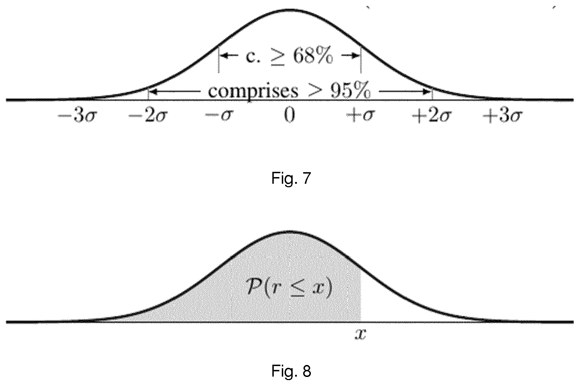

All values within of $2\sigma$ deviation around $\mu$ represent more than 95 % of all cases. All values within of $3\sigma$ deviation around $\mu$ represent more than 99 % of all cases, cf. Fig. 7. Gaussian distributed random variables can be added as

$$r_1(\mu_1, \sigma_1) + r_2(\mu_2, \sigma_2) = r_3 \left( \mu_1 + \mu_2, \sqrt{\sigma_1^2 + \sigma_2^2} \right).$$

The Gaussian integral $\Phi$ also computes the accumulation of Gaussian probability distributions. The accumulated probability $\mathcal{P}$ of a Gaussian random variable $r$ to be at most $x$ can be computed with:

$$\mathcal{P}(r \le x) = \Phi \left( \frac{x - \mu_r}{\sigma_r} \right). \tag{6}$$

Also see Fig. 8. All found *Paths* are modelled into an attack graph. The graphs model access nodes as the initial cause of an attack, i.e., the attack through an *Attacker Profile's Access* $a_a \in a_A$, and span edges over *Software* nodes towards the set of reachable *Assets* $S_{A1} \in s_A$ for an *Attacker Profile* a and *System Model s.* Each attack path in the attack graph represents a reasonable combination of *Exploits* and *Software* nodes for reaching *Assets.*

The attack graph comprises of nodes and edges. Each node represents a *Software* that is successfully breached (and contributes to a successful *Asset* breach). Each edge represents an exploitation step from one *Software* node to another. A node is attributed with the number of attack paths that lead through the node and accumulated cost the attack paths took so far. An attack path is a list of exploitation steps, combined with cost estimations. A successful attack path is a *Path* that ends in *Asset* node, i.e., this attack path leads to a successful compromise of the *Asset.*

A model for semi-automatically quantifying the risk that a given attacker successfully compromises assets in a given automotive on-board network are defined. The model represents risks more realistically as it also quantitatively tracks an attacker's exploitation steps with its budget and cost and copes with cycles.

Budget and cost are major aspects for an attacker's success and therefore for the risk quantification and graph construction. The Gaussian probability theory is employed for modelling a combination of exploits steps.

The model uses Gaussian random variables for elegantly expressing uncertainty. This homogeneity of Gaussian distributions allows mathematically elegant calculations and sharp, deterministic results. Focus is on relevant attack combinations, in this case at least 95 % of all successful cases in Gaussian distributions, and avoid a plethora of improbable attack combinations. 95 % of cases can be covered by considering random variable deviations up to $\pm 2\sigma$ only. A function

$$\mathcal{L}_{2\sigma}(r) := \mu_r + 2\sigma_r \qquad (7)$$

expresses the $2\sigma$ upper limit of an Gaussian random variable $r$ by adding its $2\sigma$ standard deviation onto its mean $\mu$.

Non-Gaussian distributions would have burdened the model with cumbersome, complex, hardly solvable symbolic calculations or with deviating and error-prone numerical simulations, e.g. Monte-Carlo methods, and would deviated results randomly. An arbitrary mixture of non-Gaussian distributions would have required CPU intensive numerical sampling simulations; even the easiest Gibbs sampling method takes four thousand iterations for an acceptable result. The seemingly slightly more realistic modelling with complex, non-Gaussian models would have been foiled by numerical simulation deviations. The final result would not have gotten significantly better.

The *Attacker Profile* contains a budget, which are resources an attacker can spend on attack steps. As a defender, we naturally lack knowledge on an attacker's budget and therefore introduce an uncertainty, too. It is assumed that the attacker's budget is Gaussian distributed as many natural events behave like a Gaussian distribution and for homogeneity with other Gaussian distributed uncertainties.

Cost are resources an attacker spends for committing attacks. Due to the central limit theorem, the cost random variable is approximated Gaussian distributed. The necessary stochastic independence stems from the huge number of independent contributions and strictly segmented execution entities. A vehicle on-board network comprises up-to and over a hundred very diverse control units and even more processes and threads. Software contributions are commonly put together by so many programmers which have never envisioned their contribution to become applied and integrated into an automotive network, e.g., libdbus (a software implementation of D-Bus (Desktop Bus), an inter-process communication mechanism that was originally made for desktop environments and is now used in several car makes). Each attacked and exploited software piece bears a certain cost. Adding up all costs for a successful attack therefore becomes Gaussian distributed.

The expected software exploitation cost

$$\mathcal{C}(a, s_{si}, s_{sj}) := \mathcal{C}_E(a, e) \qquad (8)$$

can be defined as the cost for an *Attacker Profile* a to exploit a *Software* $s_j$, given that *Attacker Profile a* already controls and originates the attack from *Software* $s_i$. The cost exploiting *Software* $s_{sj}$ comprises only the cost

$$\mathcal{C}_E(a,e)$$

for creating a suitable *Exploit e.* The cost for applying an *Exploit* is considered insignificant. If several, different *Exploits* $E_1 \in E$ are admissible for a target node, the most reasonable *Exploit* e $\in E_1$ is chosen. In case the originating and targeted *Software* is the same, i.e. $s_{si} = s_{sj}$, the cost $\mathcal{C}$ Becomes 0:

$$\mathcal{C}(a, s_{si}, s_{sj}) = 0 \text{ if } s_{si} = s_{sj}. \qquad (9)$$

If there is no communication possibility from *Software $s_i$,* to *Software $s_j$,* and therefore no *Exploit e* possible, the cost $\mathcal{C}$ becomes $\infty$:

$$\mathcal{C}(a, s_{si}, s_{sj}) = \mathcal{C}_E(a, \emptyset) = \infty \text{ if } e \notin E. \qquad (10)$$

The expected path exploitation cost

$$\mathcal{C}(a, p) := \sum_{i=1}^{n} \mathcal{C}_E(a, e_i) \text{ with } e_i \in p \qquad (11)$$

can be defined as the cost for an *Attacker Profile* a to exploit a *Path p.* A *Path* is a ordered series of *Software* nodes and *Exploits* where each *Software* of the ordered list is potentially exploitable by the processing *Software* and *Exploit* of the ordered list. The path exploits $E_1$ is the set of all necessary exploits for the *Path p.* The number of necessary unique *Exploits* $|E_1|$ for a path can be lower than the number of traversed *Software* nodes $|S_{S1}|$ on the path: $|E_1| \leq |S_{S1}|$.

The vulnerability, budget affordability and/or attackability can be expressed as probabilities. A combination of all paths gives us an overall probability, too.

The vulnerability probability expresses how likely a *Software* has a vulnerability. The main factors for the vulnerability probability are attack surface size and software quality. A expected software vulnerability probability

$$\mathcal{P}_V(s_s) := s_{sv} \qquad (12)$$

of a *Software $s_s$* with its vulnerability probability value $s_{sv}$ can be defined, which is a real value between 0 and 1. Further, the expected path vulnerability probability

$$\mathcal{P}_V(p) := \prod_{i=1}^{n} \mathcal{P}_V(s_{si}) \text{ with } s_{si} \in p \qquad (13)$$

of a *Path p* consisting of the product sum of the *Path's* software vulnerability probabilities of the *Software* nodes $s_{si} \in p$ can be defined. For example, three steps with only 10 % are enough to end a path as unsuccessful (below 0.001 probability). With each step, the probability lowers, until surpassing an insignificance cut-off mark. The vulnerability cut-off is at 0.001, i.e., 1 per mille, which is denoted by the symbol $\mathcal{P}_L$.

The budget affordability probability expresses how likely an *Attacker Profile* a could attack over *Path p,* according to affordability and vulnerability. The budget affordability probability

$$\mathcal{P}_B(a, p) = \Phi \left(\text{"cost} \leq \text{budget"}\right) = \Phi \left( \frac{\mathcal{C}(a, p)_\mu - a_{b\mu}}{\sqrt{\mathcal{C}(a, p)_\sigma^2 + a_{b\sigma}^2}} \right) \qquad (14)$$

can be defined as the Gaussian cumulative distribution function $\Phi$ of the comparison of the budget $a_b$ of an *Attacker*

*Profile* a with the expected exploitation cost $\mathcal{C}$ of a *Path p.* An attacker can only afford what is within the budget.

The attackability probability expresses how likely an *Attacker Profile* a could afford an attack over *Path p* and also find at least one vulnerability. The attackability probability

$$\mathcal{P}_A(a,p) := \mathcal{P}_V(p) * \mathcal{P}_B(a,p) \qquad (15)$$

can be defined as the product of vulnerability probability $P_V$ of th*e Path p* and budget affordability probability $P_B$ of a *Path p* und attack by *Attacker Profile a.*

For assessing the overall security, above security metrics are summarized over multiple *Paths* by merging their probabilities into a combined probability. Assuming the attacker chooses a path *p* randomly and not knowing the optimal *Path,* all attack paths $p \in P_1$ can be combined equally, i.e., use the arithmetic mean. The combination of all *Paths* against a target gives us a combined probability. An *Asset's* combined attackability probability

$$\bar{\mathcal{P}}_A(a,s_a) := \frac{\sum_{i=1}^{n} \mathcal{P}_A(a,p_i)}{n} \text{ with } p_i \in P_1 \qquad (16)$$

can be defined as the arithmetic mean of the attackability probability $\mathcal{P}$ of an *Attacker Profile a* over all *Paths* $p \in P_1$ that lead to the *Asset* $s_a$.

Eventually, *Asset* risks are quantified. An *Asset* is endangered by several *Paths.* A risk is the expected loss. The asset risk is defined as

$$\mathcal{R}(a,s_a) := s_{av}\bar{\mathcal{P}}_A(a,s_a) = s_{av}\frac{\sum_{i=1}^{n} \mathcal{P}_A(a,p_1)}{n} \text{ with } p_1 \in P \qquad (17)$$

of an *Asset* $s_a$ regarding *Attacker Profile* a as the product of the *Asset* worth $s_{av}$ with the mean attackability probability $\mathcal{P}_A$ against the *Asset* $s_a$. Assessing each *Asset's* risk gives a decision support in prioritizing risk mitigation.

An attack graph generation can be defined according to the model for computing the vulnerability risks of a given vehicular on-board network. It considers and combines also less likely attack paths for enhancing the risk estimation precision. As a trade-off between completeness and computability, only a tiny fraction of full enumeration resources is required and still more than 95% of all successful attack cases are comprised. Additionally, also a wrapper is designed around a popular Bayes network implementation for working around typical Bayes network problems, e.g., cycle inability and the distribution table explosion.

The *System Model* is evaluated according to an *Attacker Profile,* see again Figure 2. *Attacker Profiles* are to be defined and supplied by experts. *System Models* including their exploit anticipation are derived with custom made tools and from engineering documents.

Automotive systems are so tightly optimized and divers that standard system model derivation tools are useless here, e.g., nmap, a popular network discovery and security auditing tool. Fortunately, automotive engineers document all network connections and ECU services precisely and machine-readably, which enables us to parse and to rely on this documentation.

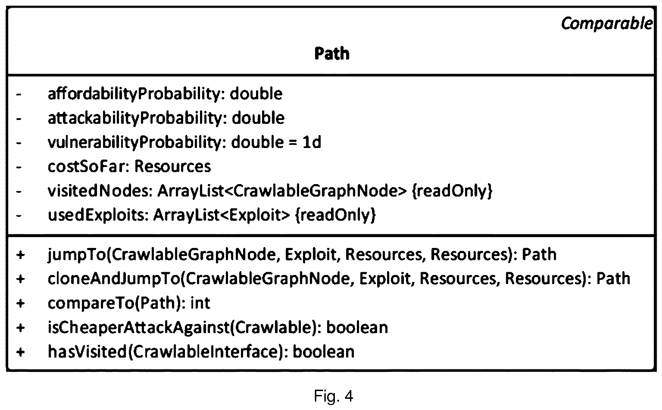

The presented method starts and primarily works with *Paths,* a data structure that represents an attack path during construction, see details in the *Path* class diagram in Fig. 4. The method creates *Paths* for each access node and continually expands, clones and finishes *Paths.*

A Path is an instantiated data structure that represents an attack path. The most important attributes are the list of previously visited nodes and the estimated probabilities and cost. The most important operations are cloning a *Path* and expanding it by a further node. This class diagram is extracted from an implementation of the method.

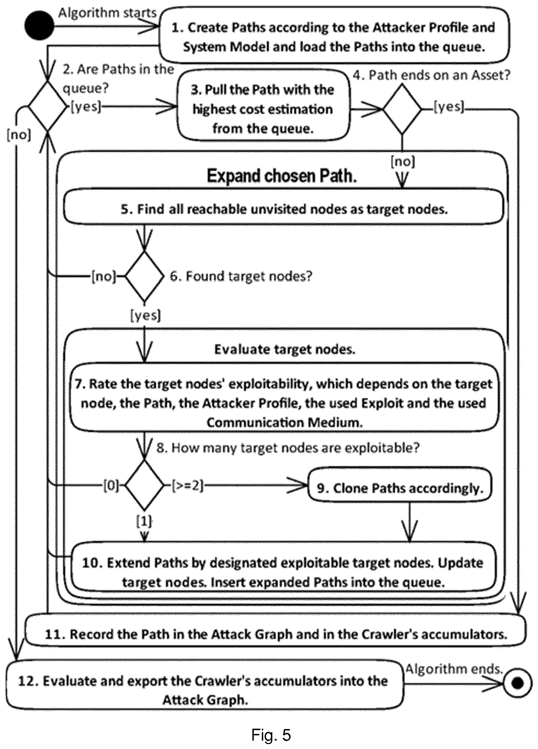

The method firstly is described with twelve steps and illustrated in in Fig. 5. The input is the *System Model s* and the *Attacker Profile a.* Basically a set of *Paths* is worked with and each *Path* extends node by node.

The Attack Graph Generation constructs attack graphs from a *System Model* and a corresponding *Attacker Profile.* All relevant attack paths are considered, i.e. more than 95 % of successful or critical attack paths are covered. *Paths* are evaluated depth-first for deciding early about dropping *Paths,* for memory can be cleaned again from superfluous *Paths.* The *System Model* is traversed under the proposition and constraints of an *Attacker Profile.* Each *Attacker Profile* results in specific attack graphs and demands an additional run. As usual in this paper's symbol norm, all entity name words start with an upper case letter, e.g. *Path.*

Step 1 is to initially create to be processed *Paths* $P_1 \in P$ according to the *Attacker Profile's Access* nodes $a_A$ and to insert these *Paths* $P_1$ into the queue $q$. Queue $q$ is a data structure that holds to be processed *Paths* $P_1$ and sorts those according to the accumulated cost function $\mathcal{C}$.

Step 2 is to check the queue $q$ for *Paths* to continue with. If the queue $q$ is having *Paths* left, i.e., $|P_1| \geq 1$, as usual, the method is proceeding with step 3. Otherwise, if the queue q is empty, i.e., $|P_1| = 0$, the algorithm proceeds with step 12.

Step 3 is to pull the *Path* $p_1$ with the highest accumulated cost according to the function $\mathcal{C}$ from the queue q. Choosing the costliest *Path* $p_1$ helps for performance.

Step 4 is to check whether the *Path* $p_1$ ends on an *Asset* node $s_A$, i.e., whether the most recent element of $p_{1n1}$ is in the visited nodes list: $p_{1n1} \in s_A$. As a *System Model's* majority of nodes are not *Asset* nodes $s_A$, but *Software* nodes $s_S$, the method usually proceeds with step 5. But if the *Path* ends on an *Asset* nodes, the method proceeds with step 11.

Step 5 is to collect all adjacent target nodes $g_{T1}$. Target nodes are any *Software* and *Asset* nodes that can be reached directly or via write-accessible *Communication Medium* nodes and that can be compromised with at least one (potential) *Exploit* and that are not yet on the *Path's* list of visited nodes $p_{1N}$.

Step 6 is to check whether target nodes $g_{T1}$ were found. If none, i.e., $|g_{T1}| = 0$, the *Path* $p_1$ will be dropped and the method continues at step 2. The regular case is yes, i.e., $|g_{T1}| \geq 1$, and moving to step 7.

Step 7 is to calculate the exploitability of each target node $g_{t1} \in g_{T1}$. The exploitability depends on the target node $g_{t1}$, the *Path* $p_1$, the considered *Attacker Profile a,* the used *Communication Medium* $s_c$ and the available *Exploits E*.

Step 8 is to decide and count the target nodes $g_{T2} \subseteq g_{T1}$ that are sufficiently exploitable: the vulnerability probability $p_v$ must be within the significance limit $\mathcal{P}_L$, and the estimated exploitation cost

$$\mathcal{C}(a,p_1) + \mathcal{C}(a,p_{n1},g_{t2}) \, |$$

must be within the $2\sigma$ cost limit

$$\mathcal{L}_2(a_b),$$

i.e., $g_{t2} \in g_{T2} \subseteq g_{T1}$ with

$$\mathcal{C}(a,p_1) + \mathcal{C}(a,p_{n1},g_{t2}) \leq \mathcal{L}_2(a_b). \, |$$

If no node in $g_{T1}$ meets above conditions, i.e., $|g_{T2}| = 0$, *Path* $p_1$ will be dropped and the method proceeds with step 2. If exactly one target node meets above conditions, i.e., $|g_{T2}| = 1$, the method defines $P_2 = \{p_1\}$ and proceeds for saving on resources directly with step 10. If several nodes meet above conditions, i.e., $|g_{T2}| \geq 2$, the method proceeds with step 9.

Step 9 is to clone *Path* $p_1$ according to the number of exploitability-condition meeting target nodes $|g_{T2}|$. *Path* $p1$ and its clones become the set of *Paths* $P_2$. The number of *Paths* equals the number of target nodes, i.e., $|P_2| = |g_{T2}|$.

Step 10 is to extend each *Path* $p_2 \in P_2$ with one exploitability-condition meeting target node $g_{t2} \in g_{T2}$. Each *Path* $p_2$ is extended onto its target node $g_{t2}$. Each target node $g_{t2}$ is updated, if *Path* $p2$ is a new optimum. All *Paths* $P_2$ are inserted into the queue q, and the method returns to step 2.

Step 11 is to record and document *Path* $p_1$ as a successful one, which hit an *Asset* node. The successful *Path*

$p_1$ is exported into the attack graph as attack graph nodes and edges. *Path* $p_1$ is also recorded in accumulators of the attack graph for an eventual evaluation. The method returns to step 2.

Step 12 is to evaluate all accumulators, flush last results into the attack graph and terminate the method.

The attack graph generation will always terminate, i.e., come to a conclusion, as the number of relevant *Paths* to process is finite. A *Path* is finished, if it either reaches an *Asset* node, exceeds the *Attacker Profile's* cost limit $\mathcal{L}_{2\sigma}(a_b)$, lacks vulnerability probability $p_v$ or eventually expands exhaustively. Finished *Paths* are never inserted into the queue again; it will run empty; and the method will terminate, i.e., come to a conclusion.

A *Path* is finished, if it successfully reaches an *Asset* node, which is checked in step 4.

A *Path* $p$ is finished, if its cost $\mathcal{C}(p)$ overruns the *Attacker Profile's* $2\sigma$ cost limit $\mathcal{L}_{2\sigma}(a_b)$, making it unaffordable / irrelevant, which is checked in step 8.

A *Path* $p$ is finished, if its vulnerability probability $p_v$ lowers below the insignificance limit $\mathcal{P}_L$, here 0.1%, which is checked in step 8.

A *Path* $p$ is finished, if it cannot target any more unvisited nodes, which is checked in step 5. The method will always terminate as at least this condition will be met eventually. As the number of *System Model Software* nodes $|s_S|$ is finite and as the *Path's* visited nodes $p_N$ are excluded from a *Path's* target nodes, the number of *Paths* $|P|$ is finite, too, and the method is guaranteed to terminate.

The method's computational complexity is reduced by dropping irrelevant *Paths* early and by modelling with probabilities that can be calculated fast. *Paths* become irrelevant beyond the cost limit $\mathcal{L}_{2\sigma}(a_b)$ as well as below the probability limit $\mathcal{P}_L$. The method focuses on relevant attack combinations, which comprise 95 % of all successful cases in Gaussian distributions, and avoids a plethora of improbable attack combinations in the depth of the network. As the model represents all uncertainties as Gaussian distributions, the method can model all uncertain input values with merely two floating point numbers and combine those in a moderate amount of CPU cycles. Otherwise, an arbitrary mixture of non-Gaussian distributions would have required CPU intensive numerical sampling simulations. Even the easiest Gibbs sampling method takes four thousands of iterations for an acceptable result. Even with an overhead of only factor 2.5, the computational input combination complexity would have multiplied by at least five magnitudes - extending a five minute calculation to circa one year.

The method's memory consumption is also reduced by reusing *Paths,* by cloning only as many *Paths* as necessary and by dropping *Paths* again. Choosing the costliest *Path* $p_1$ keeps the memory usage reasonably low as $p_1$ usually arrives earlier at the *Attacker Profile's* cost limit $\mathcal{L}_{2\sigma}(a_b)$ or at an *Asset* node, where $p_1$ is finally evaluated and dropped from memory. Hence, the method can be considered a depth-first search. Memory measurement shows a certain memory consumption cap, i.e., memory requirement stays almost constant, even with growing network sizes. Measurement details are depicted in the following evaluation section.

The method can be scaled with MapReduce. Path expansions can be computed independently and distributed over many computers. The Path expansions' results can be collected in graph node objects and summarized in an attack graph. As Path expansions consume more than 94% of the computational time and can be run in parallel, the method gains enormous performance with cloud computing.

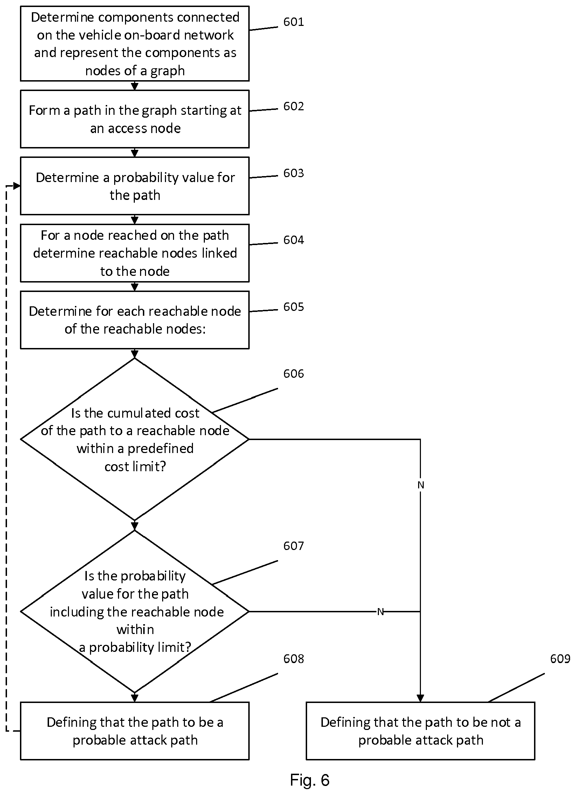

Briefly, the method can also be summarized as follows with reference to Fig. 6:

In step 601, components connected on the vehicle on-board network are determined and represented as nodes of a graph. In the graph, an edge between a first node and a second node represents a communication link between the first and the second node. Nodes allowing access to the network are access nodes. Nodes providing specific functions or access to specific functions are asset nodes. For example, the first node can be an access node. The edge is weighted and the weight of the edge is a cost required to attack the second node from the first node through the communication link. A path is formed, Step 602, by at least one node of the graph. A path typically is a sequence of nodes linked by edges.

A probability value is determined for the path, step 603. For a node reached on the path reachable nodes linked to the node reached are determined, step 604. The node reached is a node connected to another node in the already established path. This can be regarded as a process similar to a depth-first search in the graph. In step 605, for each reachable node of the reachable nodes it is determined whether a cumulated cost of the path to the reachable node is within a predefined cost limit, Step 606. It is also determined, step 607, whether the probability value for the path including the reachable node is within a probability limit. If both is the case, the path is defined to be a probable attack path in step 608.

The steps starting at step 603 can be repeatedly performed. For each reachable node of the reachable nodes it can be determined whether the cumulated cost for reaching the reachable node exceeds the predefined cost limit. It may also be determined and whether the probability value for a path including the reachable node exceeds the probability limit. If either is the case, the path to the reachable node is judged to be an improbable attack path, step 609.

The method described hence can be used for simulating different attack paths. In an example, the method can be used to address determined critical attack paths in a vehicle on-board network.

There are, for example, many interfaces that can be used to establish a connection with the vehicle, e.g. Bluetooth, WLAN and on-board diagnostics (OBD) functions. An attacker may use these interfaces to access the vehicle by either a wireless or wired connection to the vehicle. The interfaces hence are represented as access nodes in the graph. However, as the access nodes bear a potential risk for an attack, the actual thread level may depend on the network configuration, e.g. whether a vehicle user has connected additional interfaces to the network (e.g. access point connected to an USB port of the vehicle). Moreover, in order to be able to address the attack risk, a user of the vehicle has to be made aware of the thread. Often, the user isn't even aware that there is a risk.

The invention now allows to identify unnecessary open interfaces prone to attacks, allows to inform a vehicle user and to identify rarely used interfaces, i.e. nodes or communication links.

If an attack path, for example is determined to be critical, the vehicle user can be made aware of the potential risk. A visual or acoustical information can be output through a control unit of the vehicle or through a mobile terminal connected to such a control unit indicating the interface or access node (e.g. Bluetooth, WiFi access point, OBD interface, ...) serving as a starting point of or contributor to the critical attack path. The vehicle user can then disable the interface or access point, e.g. by interacting with a user interface, e.g. by disabling an option in a graphical user interface. By disabling the respective interface or access node, the critical attack path is also disabled. A contributor in this case is a node or communication link on the critical path from the access node which, when disabled, disables the whole path. Of course, the path can also be disabled automatically, when it is determined to be critical. The vehicle can then inform the user that an interface/access node, contributor or function was disabled and preferably also give a reason.

Additionally, the benefit a user has from the availability of an interface can be considered. The method can record how often an interface or access node is used by a user or a user device (e.g. a smartphone using a Bluetooth interface). The fewer the interface is used, the lower the benefit of that interface being active is. That means, the use of the interface over time is recorded and the benefit is determined on this basis. If the benefit is below a certain threshold value, which represents a minimum benefit of the interface, the electronic control unit can automatically disable or interactively suggest to disable the respective interface or access node.

The threshold values can be predetermined and/or they can be dynamically adapted, e.g. based on information obtained form an external remote computing system (Server, Cloud, Backend, ...) via a wireless communication network or via a wired connection, e.g. from a vehicle diagnostics system. The disabled/deactivated and active interfaces can be displayed and controlled via a user interface, e.g. a display unit of the vehicle or a web-interface.

Information regarding the activated and deactivated interfaces can be sent and evaluated by the remote computing system. Especially the threshold values can be adapted based on the information received by the remote computing system.

Also, information received by the remote computing system can be cumulated and specific attacks can be prevented by remotely disabling interfaces from the remote computing system in the vehicle. E.g. attacks that are frequently used by a group of car thieves using a specific attack method can be disabled or suggestions to use a specific interface activation scheme can be conveyed to the vehicle user.

Summary of symbols used:

| Symbol | Description. |
|---|---|
| A | Set of Attacker Profiles. |
| $a_A$ | An Attacker Profile's Access set. |
| $a_b$ | An Attacker Profile's budget. |
| $a_E$ | An Attacker Profile's set of prepared Exploits. |
| $a_M$ | An Attacker Profile's Motivation set. |
| $a_S$ | An Attacker Profile's Skill set. |
| $\mathcal{C}: (A,P) \rightarrow R$ | An attacker's cost for exploiting all nodes along the Path. |
| $\mathcal{C}: (A,s_O,s_T) \rightarrow R$ | An attacker's cost for exploiting node st when originating from node $s_o$. |
| $\mathcal{C}_E : (A,E) \rightarrow R$ | The cost for creating Exploit $e \in E$ for Attacker Profile a. |
| E | Set of anticipated Exploits. |
| $e_C$ | An Exploit's set of traversable Communication Media. |
| $e_S$ | An Exploit's set of necessary Skills-cost tuples. |

(continued)

| Symbol | Description. |
|---|---|
| $i,j \in \mathbb{N}_0^+$ | An arbitrary natural, positive number. |
| $\mathcal{L}_2 : R \to \mathbb{R}$ | The upper $2\sigma$ limit from a resource r is defined as $\mu + 2\sigma$. |
| $\mathcal{P}_A : P \to [0,1]$ | The probability for attack via Paths P. |
| $\mathcal{P}_B : P \to [0,1]$ | The probability for budget affordability for Paths P. |
| $\mathcal{P}_L$ | The probability limit for vulnerability when a Path is dismissed. |
| $\mathcal{P}_V : P \to [0,1]$ | The probability for vulnerability for Paths P. |
| P | A set of Paths. One Path is series of steps in an attack graph. |
| $p_b$ | A Path's budget affordability probability. |
| $p_e$ | A Path's exploitability probability. |
| $p_N$ | A Path's list of visited nodes. |
| $p_v$ | A Path's vulnerability probability. |
| q | A queue for Paths P , sorted according to $\mathcal{C}(\mathcal{P})$. |
| $\mathcal{R}: (A,P^n,s_A) \to R$ | Risk for an Asset $s_A$ against Attacker Profile A via Paths P. |
| R | An arbitrary, Gaussian-distributed resource, defined by mean $\mu$ and standard deviation $\sigma$. |
| S | A set of System Models. |
| $s_A$ | A System Model's set of Assets. |
| $s_{av}$ | A System Model Asset's value. |
| $s_C$ | A System Model's set of Communication Media. |
| $s_O$ | A System Model's set of originating nodes. Access + Software. |
| $s_S$ | A System Model's set of Software nodes. |
| $S_{sv}$ | A System Model Software Node's vulnerability probability |
| $s_T$ | A System Model's set of target nodes. Software + Asset. |
| $x,y,z \in \mathbb{R}$ | An arbitrary real number. |

## Claims

1. Method performed by a control unit of a vehicle or by a remote computing system for assessing attack paths on a vehicle on-board network, wherein

   a. components connected to the network represent nodes of a graph, in which an edge between a first node and a second node is a communication link between the first and the second node, nodes allowing access to the network are access nodes, nodes providing specific functions or access to specific functions are asset nodes, and wherein the edge is weighted and the weight of the edge is a cost required to attack the second node from the first through the communication link,
   b. a path is formed by at least one node of the graph,
   c. wherein a vulnerability probability value consisting of a product sum of the path's software vulnerability probabilities of the nodes that form the path is determined for the path,
   d. for the at least one node of the graph reachable nodes linked to the at least one node are determined, and
   e. for each reachable node of the reachable nodes it is determined

      i. whether a cumulated exploitation cost of the path to the reachable node is within a predefined cost limit,
      ii. whether the vulnerability probability value for the path including the reachable node is within a probability limit, and

f. if i. and ii. are fulfilled, defining the path to be a probable attack path.

2. Method according to claim 1, wherein the nodes are hardware and/or software components.

3. Method according to claim 1 or 2, wherein the path is defined to be a critical attack path if an asset node is reached on the path and the path is a probable attack path.

4. Method according to any one of the preceding claims, wherein steps c. to e. are repeatedly performed and for each reachable node of the reachable nodes the method determines

i. whether the cumulated exploitation cost for reaching the reachable node exceeds the predefined cost limit, and
ii. whether the vulnerability probability value for a path including the reachable node exceeds the probability limit, and,
if either is the case, determining the path to the reachable node to be an improbable attack path.

5. Method according to any one of the preceding claims, wherein an improbable attack path is discarded and/or information on the improbable attack path is stored, e.g. the improbable attack paths are counted.

6. Method according to any one of the preceding claims, wherein the method, is executed whenever a component or communication link is added or removed from the network.

7. Method according to any one of the preceding claims, wherein the network comprises a vehicle bus network, especially a CAN-Bus.

8. Method according to any one of the preceding claims, wherein, in case an asset node is reached on a path from an access node and no limit is reached, a critical attack path is detected and a message is issued to a control unit of a vehicle or an off-board computing system identifying the critical attack path.

9. Method according to claim 8, wherein the control unit conveys the signal to an emitter for visually and/or acoustically displaying a message, preferably in the vehicle, in particular requesting to disable a function or interface associated with the one of the nodes of the critical path.

10. Method according to any one of the preceding claims, wherein the access node is an interface and the use of the interface is recorded to determine a benefit of the interface, and wherein preferably the determined benefit is compared with a threshold value and, based on the determined benefit and/or the comparison, a message is conveyed to the user of a vehicle suggesting to disabled the access node or the access node is disabled automatically.

11. Method according to any one of the preceding claims, wherein a node or a communication link is on the critical path and the use of the node or communication link is recorded to determine a benefit of the node or communication link, and wherein preferably the determined benefit is compared with a threshold value and based on the determined benefit and/or the comparison the node or communication link is automatically disabled and optionally an informative message is conveyed to the user of a vehicle.

12. System comprising a control unit of a vehicle or a remote computing system configured to perform a method according to claims 1-11.

13. Vehicle comprising the system of claim 12.

**Patentansprüche**

1. Verfahren, das von einer Steuereinheit eines Fahrzeugs oder von einem Fernrechensystem zum Einschätzen von Angriffspfaden in einem Fahrzeugbordnetz durchgeführt wird, wobei

a. Komponenten, die mit dem Netz verbunden sind, Knoten eines Graphen darstellen, in dem eine Kante zwischen einem ersten Knoten und einem zweiten Knoten einer Kommunikationsverbindung zwischen dem ersten und dem zweiten Knoten entspricht, wobei Knoten, die Zugriff auf das Netz erlauben, Zugriffsknoten entsprechen, Knoten, die spezifische Funktionen oder Zugriff auf spezifische Funktionen bereitstellen, Betriebsmittel-Knoten entsprechen und wobei die Kante gewichtet ist und die Gewichtung der Kante einem Aufwand entspricht, der erforderlich ist, um den zweiten Knoten von dem ersten durch die Kommunikationsverbindung anzugreifen,

b. ein Pfad durch mindestens einen Knoten des Graphen gebildet ist,

c. wobei ein Schwachstellenwahrscheinlichkeitswert, der aus einer Produktsumme der Pfad-Software-Schwachstellenwahrscheinlichkeiten der Knoten, die den Pfad bilden, besteht, für den Pfad bestimmt wird,

d. für den mindestens einen Knoten des Graphen erreichbare Knoten, die mit dem mindestens einen Knoten verbunden sind, bestimmt werden, und

e. für jeden der erreichbaren Knoten bestimmt wird,

i. ob kumulierte Nutzungskosten des Pfades zu dem erreichbaren Knoten unter einem im Voraus definierten Kostenlimit liegen,

ii. ob der Schwachstellenwahrscheinlichkeitswert für den Pfad, der den erreichbaren Knoten enthält, unter einem Wahrscheinlichkeitslimit liegt, und

f. dann, wenn i. und ii. erfüllt sind, der Pfad als ein wahrscheinlicher Angriffspfad definiert wird.

2. Verfahren nach Anspruch 1, wobei die Knoten Hardware- und/oder Software-Komponenten entsprechen.

3. Verfahren nach Anspruch 1 oder 2, wobei der Pfad als ein kritischer Angriffspfad definiert wird, wenn ein Betriebsmittel-Knoten auf dem Pfad erreicht wird und der Pfad einem wahrscheinlichen Angriffspfad entspricht.

4. Verfahren nach einem der vorhergehenden Ansprüche, wobei die Schritte c. bis e. wiederholt durchgeführt werden und für jeden der erreichbaren Knoten das Verfahren bestimmt

i. ob die kumulierten Nutzungskosten zum Erreichen der erreichbaren Knoten das im Voraus definierte Kostenlimit übersteigen und

ii. ob der Schwachstellenwahrscheinlichkeitswert für einen Pfad, der den erreichbaren Knoten enthält, das Wahrscheinlichkeitslimit übersteigt und,

dann, wenn eines zutrifft, der Pfad zu dem erreichbaren Knoten als ein unwahrscheinlicher Angriffspfad bestimmt wird.

5. Verfahren nach einem der vorhergehenden Ansprüche, wobei ein unwahrscheinlicher Angriffspfad verworfen wird und/oder Informationen über den unwahrscheinlichen Angriffspfad gespeichert werden, beispielsweise die unwahrscheinlichen Angriffspfade gezählt werden.

6. Verfahren nach einem der vorhergehenden Ansprüche, wobei das Verfahren jedes Mal ausgeführt wird, wenn eine Komponente oder eine Kommunikationsverbindung hinzugefügt wird oder aus dem Netz entfernt wird.

7. Verfahren nach einem der vorhergehenden Ansprüche, wobei das Netz ein Fahrzeugbusnetz, insbesondere einen CAN-Bus, enthält.

8. Verfahren nach einem der vorhergehenden Ansprüche, wobei in dem Fall, in dem ein Betriebsmittel-Knoten auf dem Pfad von einem Zugriffsknoten erreicht wird und kein Limit erreicht wird, ein kritischer Angriffspfad detektiert wird und eine Nachricht an eine Steuereinheit eines Fahrzeugs oder ein nicht integriertes Rechensystem, das den kritischen Angriffspfad identifiziert, ausgegeben wird.

9. Verfahren nach Anspruch 8, wobei die Steuereinheit das Signal zu einem Emitter zum optischen und/oder akustischen Anzeigen, vorzugsweise in dem Fahrzeug, einer Nachricht, die insbesondere anfordert, eine Funktion oder eine Schnittstelle, die zu einem der Knoten des kritischen Pfades gehört, zu deaktivieren, übermittelt.

10. Verfahren nach einem der vorhergehenden Ansprüche, wobei der Zugriffsknoten einer Schnittstelle entspricht und die Benutzung der Schnittstelle aufgezeichnet wird, um einen Nutzen der Schnittstelle zu bestimmen, wobei bevorzugt der bestimmte Nutzen mit einem Schwellenwert verglichen wird, und basierend auf dem bestimmten Nutzen und/oder dem Vergleich, eine Nachricht zu einem Benutzer eines Fahrzeugs übermittelt wird, die vorschlägt, den Zugriffsknoten zu deaktivieren, oder der Zugriffsknoten automatisch deaktiviert wird.

**11.** Verfahren nach einem der vorhergehenden Ansprüche, wobei sich ein Knoten oder eine Kommunikationsverbindung in dem kritischen Pfad befindet und die Benutzung des Knotens oder der Kommunikationsverbindung aufgezeichnet wird, um einen Nutzen des Knotens oder der Kommunikationsverbindung zu bestimmen, und wobei vorzugsweise der bestimmte Nutzen mit einem Schwellenwert verglichen wird und basierend auf dem bestimmten Nutzen und/oder dem Vergleich der Knoten oder die Kommunikationsverbindung automatisch deaktiviert wird und wahlweise eine informative Nachricht an den Benutzer des Fahrzeugs übermittelt wird.

**12.** System, das eine Steuereinheit eines Fahrzeugs oder ein Fernrechensystem umfasst, das konfiguriert ist, ein Verfahren nach den Ansprüchen 1-11 durchzuführen.

**13.** Fahrzeug, das das System nach Anspruch 12 enthält.

**Revendications**

**1.** Procédé effectué par une unité de commande d'un véhicule ou par un système informatique à distance pour évaluer des chemins d'attaque sur un réseau à bord d'un véhicule, dans lequel

a) des composants connectés au réseau représentent des nœuds d'un graphique, dans lequel un bord entre un premier nœud et un deuxième nœud est une liaison de communication entre le premier et le deuxième nœud, les nœuds donnant accès au réseau sont des nœuds d'accès, les nœuds assurant des fonctions spécifiques ou un accès à des fonctions spécifiques sont des nœuds de ressource, et dans lequel le bord est pondéré et la pondération du bord est un coût nécessaire pour attaquer le deuxième nœud à partir du premier à travers la liaison de communication,
b) un chemin est formé par au moins un nœud du graphique,
c) dans lequel une valeur de probabilité de vulnérabilité, composée d'une somme de produits des probabilités de vulnérabilité logicielle du chemin des nœuds qui forment le chemin, est déterminée pour le chemin,
d) pour ledit au moins un nœud du graphique, des nœuds accessibles reliés audit au moins un nœud sont déterminés, et
e) pour chaque nœud accessible des nœuds accessibles, il est déterminé

i) si un coût d'exploitation cumulé du chemin jusqu'au nœud accessible est compris dans une limite de coût prédéfinie,
ii) si la valeur de probabilité de vulnérabilité pour le chemin comprenant le nœud accessible est comprise dans une limite de probabilité, et

f) si i) et ii) sont satisfaits, le chemin est défini comme étant un chemin d'attaque probable.

**2.** Procédé selon la revendication 1, dans lequel les nœuds sont des composants matériels et/ou logiciels.

**3.** Procédé selon la revendication 1 ou 2, dans lequel le chemin est défini comme étant un chemin d'attaque critique si un nœud de ressource est atteint sur le chemin et le chemin est un chemin d'attaque probable.

**4.** Procédé selon l'une quelconque des revendications précédentes, dans lequel les étapes c) à e) sont effectuées de manière répétée et pour chaque nœud accessible des nœuds accessibles le procédé détermine

i) si le coût d'exploitation cumulé pour atteindre le nœud accessible dépasse la limite de coût prédéfinie, et
ii) si la valeur de probabilité de vulnérabilité pour un chemin comprenant le nœud accessible dépasse la limite de probabilité, et
si l'un ou l'autre est le cas, il est déterminé que le chemin jusqu'au nœud accessible est un chemin d'attaque improbable.

**5.** Procédé selon l'une quelconque des revendications précédentes, dans lequel un chemin d'attaque improbable est abandonné et/ou des informations concernant le chemin d'attaque improbable sont stockées, par exemple les chemins d'attaque improbables sont comptés.

**6.** Procédé selon l'une quelconque des revendications précédentes, dans lequel le procédé est exécuté chaque fois qu'un composant ou une liaison de communication est ajouté(e) ou retiré(e) du réseau.

**7.** Procédé selon l'une quelconque des revendications précédentes, dans lequel le réseau comprend un réseau de bus de véhicule, en particulier un bus CAN.

**8.** Procédé selon l'une quelconque des revendications précédentes, dans lequel, au cas où un nœud de ressource est atteint sur un chemin provenant d'un nœud d'accès et aucune limite n'est atteinte, un chemin d'attaque critique est détecté et un message identifiant le chemin d'attaque critique est émis à une unité de commande d'un véhicule ou à un système informatique non embarqué.

**9.** Procédé selon la revendication 8, dans lequel l'unité de commande communique le signal à un émetteur pour présenter un message de manière visuelle et/ou acoustique, de préférence dans le véhicule, qui demande en particulier de désactiver une fonction ou une interface associée à l'un des nœuds du chemin critique.

**10.** Procédé selon l'une quelconque des revendications précédentes, dans lequel le nœud d'accès est une interface et l'utilisation de l'interface est enregistrée pour déterminer un intérêt de l'interface, et dans lequel de préférence l'intérêt déterminé est comparé à une valeur seuil, et sur la base de l'intérêt déterminé et/ou de la comparaison, un message suggérant de désactiver le nœud d'accès est communiqué à l'utilisateur d'un véhicule, ou le nœud d'accès est désactivé automatiquement.

**11.** Procédé selon l'une quelconque des revendications précédentes, dans lequel un nœud ou une liaison de communication se trouve sur le chemin critique et l'utilisation du nœud ou de la liaison de communication est enregistrée pour déterminer un intérêt du nœud ou de la liaison de communication, et dans lequel de préférence l'intérêt déterminé est comparé à une valeur seuil et sur la base de l'intérêt déterminé et/ou de la comparaison, le nœud ou la liaison de communication est automatiquement désactivé(e), et en option un message d'information est communiqué à l'utilisateur d'un véhicule.

**12.** Système, comprenant une unité de commande d'un véhicule ou un système informatique à distance, configuré pour effectuer un procédé selon la revendications 1 à 11.

**13.** Véhicule, comprenant le système selon la revendication 12.

Fig. 1

Fig. 2

Fig. 3

| | | | |
|---|---|---|---|
| | | | *Comparable* |
| | | **Path** | |
| - | affordabilityProbability: double | | |
| - | attackabilityProbability: double | | |
| - | vulnerabilityProbability: double = 1d | | |
| - | costSoFar: Resources | | |
| - | visitedNodes: ArrayList<CrawlableGraphNode> {readOnly} | | |
| - | usedExploits: ArrayList<Exploit> {readOnly} | | |
| + | jumpTo(CrawlableGraphNode, Exploit, Resources, Resources): Path | | |
| + | cloneAndJumpTo(CrawlableGraphNode, Exploit, Resources, Resources): Path | | |
| + | compareTo(Path): int | | |
| + | isCheaperAttackAgainst(Crawlable): boolean | | |
| + | hasVisited(CrawlableInterface): boolean | | |

Fig. 4

Algorithm starts

1. Create Paths according to the Attacker Profile and System Model and load the Paths into the queue.

2. Are Paths in the queue?

[yes]

3. Pull the Path with the highest cost estimation from the queue.

4. Path ends on an Asset?

[yes]

[no]

[no]

Expand chosen Path.

5. Find all reachable unvisited nodes as target nodes.

[no]

6. Found target nodes?

[yes]

Evaluate target nodes.

7. Rate the target nodes' exploitability, which depends on the target node, the Path, the Attacker Profile, the used Exploit and the used Communication Medium.

8. How many target nodes are exploitable?

[0]

[>=2]

9. Clone Paths accordingly.

[1]

10. Extend Paths by designated exploitable target nodes. Update target nodes. Insert expanded Paths into the queue.

11. Record the Path in the Attack Graph and in the Crawler's accumulators.

12. Evaluate and export the Crawler's accumulators into the Attack Graph.

Algorithm ends.

Fig. 5

Determine components connected
on the vehicle on-board network
and represent the components as
nodes of a graph — 601

Form a path in the graph starting at
an access node — 602

Determine a probability value for
the path — 603

For a node reached on the path
determine reachable nodes linked
to the node — 604

Determine for each reachable node
of the reachable nodes: — 605

606

Is the cumulated cost
of the path to a reachable node
within a predefined
cost limit?

N

607

Is the probability
value for the path
including the reachable node
within
a probability limit?

N

608

Defining that the path to be a
probable attack path

609

Defining that the path to be not a
probable attack path

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MARTIN SALFER et al.** ECCV 2016 conference. Springer International publishing, 01 January 2014, vol. 8783, 442-453